# EUROPEAN PATENT APPLICATION

(11) **EP 4 814 684 A1**
(43) Date of publication of application: **30.09.2026**
(21) Application number: 25209028.7
(22) Date of filing: 16.10.2025
(51) Int. Cl.: G06F 3/06

(54) **DATA WRITING METHOD AND DEVICE FOR DISTRIBUTED STORAGE SYSTEM, AND STORAGE MEDIUM**

(30) Priority: 28.03.2025 CN 202510390197
(71) Applicant: Beijing Zitiao Network Technology Co., Ltd., Beijing 100190 (CN)
(72) Inventor: LI, Yunhao, Beijing, 100028 (CN); ZHAO, Pengwei, Beijing, 100028 (CN); SHEN, Haijia, Beijing, 100028 (CN); WANG, Jiaqi, Beijing, 100028 (CN); LV, Wei, Beijing, 100028 (CN); ZHOU, Xianghui, Beijing, 100028 (CN); ZHANG, Fenghao, Beijing, 100028 (CN); ZHANG, Xiaoyu, Beijing, 100028 (CN); JIANG, Yadong, Beijing, 100028 (CN); ZHONG, Jianong, Beijing, 100028 (CN); XU, Jianhai, Beijing, 100028 (CN)
(74) Representative: Isarpatent

(57) **Abstract**

Embodiments of the present disclosure provide a data writing method and device for a distributed storage system, and a storage medium. The method includes: receiving a data write request for a target cloud disk shard in the distributed storage system, wherein the data write request is used to request to write target data; selecting an adaptive target write mode from a write mode set supported by the distributed storage system based on a data length of the target data, a user preset delay threshold of the target cloud disk shard, and an operating state of a storage cluster to which the target cloud disk shard belongs, wherein the write mode set is configured to at least include a replica mechanism write mode and an erasure coding mechanism write mode; and performing the target write mode on the target data. An appropriate write mode is selected by considering the data length of the target data, a user preset delay requirement, and a state of the storage cluster, to flexibly cope with different write scenarios, balance delay, traffic amplification and space amplification, thereby improving system performance.

## Description

### CROSS-REFERENCE TO RELATED APPLICATION

This application claims priority to Chinese Patent Application No. 202510390197.2, filed on March 28, 2025, the entire disclosure of which is incorporated herein by reference as part of the present disclosure.

### TECHNICAL FIELD

Embodiments of the present disclosure relate to a field of computer and network communication technology and, in particular, to a data writing method and device for a distributed storage system, and a storage medium.

### BACKGROUND

At present, under a cloud computing architecture, a user deploys and runs an application by purchasing a virtual machine (Virtual Machine, VM) of an elastic computing service (Elastic Computing Service, ECS), and the virtual machine provides a data persistence capability by mounting a cloud disk (Block Device) of an elastic block storage (Elastic Block Storage, EBS).

To avoid the problem of data loss and inaccessibility caused by a failure of a small number of storage nodes, a distributed storage system usually uses a replica mechanism or an erasure coding mechanism to ensure data reliability. However, both the replica mechanism and the erasure coding mechanism have certain limitations and are difficult to flexibly cope with different user write scenarios.

### SUMMARY

At least an embodiment of the present disclosure provides a data writing method for a distributed storage system, comprising: receiving a data write request for a target cloud disk shard in the distributed storage system, wherein the data write request is used to request to write target data; selecting an adaptive target write mode from a write mode set supported by the distributed storage system based on a data length of the target data, a user preset delay threshold of the target cloud disk shard, and an operating state of a storage cluster to which the target cloud disk shard belongs, wherein the write mode set is configured to at least comprise a replica mechanism write mode and an erasure coding mechanism write mode; and performing the target write mode on the target data.

In at least an embodiment, the selecting an adaptive target write mode from a write mode set supported by the distributed storage system based on a data length of the target data, a user preset delay threshold of the target cloud disk shard, and an operating state of a storage cluster to which the target cloud disk shard belongs comprises: selecting the replica mechanism write mode from the write mode set as the target write mode in response to neither a resource state parameter nor a performance state parameter of the storage cluster to which the target cloud disk shard belongs exceeding respective corresponding preset state thresholds; and determining whether the user preset delay threshold is lower than a delay of the erasure coding mechanism write mode in the write mode set in response to at least one of the resource state parameter and the performance state parameter of the storage cluster to which the target cloud disk shard belongs exceeding a corresponding preset state threshold; if yes, selecting the replica mechanism write mode from the write mode set as the target write mode; if no, selecting the adaptive target write mode from the write mode set based on the data length of the target data.

In at least an embodiment, the selecting the adaptive target write mode from the write mode set based on the data length of the target data comprises: predicting, based on the data length of the target data and a configuration parameter of the replica mechanism write mode in the write mode set, a write data length of the target data using the replica mechanism write mode; predicting, based on the data length of the target data, and a configuration parameter and a stripe length of the erasure coding mechanism write mode in the write mode set, a write data length of the target data using the erasure coding mechanism write mode; and selecting a write mode corresponding to a predicted smallest write data length as the target write mode.

In at least an embodiment, the predicting, based on the data length of the target data, and the configuration parameter and the stripe length of the erasure coding mechanism write mode in the write mode set, the write data length of the target data using the erasure coding mechanism write mode comprises: aligning the data length of the target data to an integral multiple of the stripe length to determine an aligned data length of the target data; and determining a product of the aligned data length of the target data and an amplification factor of the erasure coding mechanism write mode as the write data length of the target data using the erasure coding mechanism write mode.

In at least an embodiment, the predicting, based on the data length of the target data and the configuration parameter of the replica mechanism write mode in the write mode set, the write data length of the target data using the replica mechanism write mode comprises: determining a product of the data length of the target data and an amplification factor of the replica mechanism write mode as the write data length of the target data using the replica mechanism write mode.

In at least an embodiment, the write mode set is configured to at least comprise one replica mechanism write mode and multiple erasure coding mechanism write modes.

In at least an embodiment, the method further comprises: predicting a distribution of to-be-written data lengths in a future time window based on a distribution of data lengths of historical data of the target cloud disk shard; and adjusting the write mode set supported by the distributed storage system based on the distribution of the to-be-written data lengths in the future time window.

In at least an embodiment, the adjusting the write mode set supported by the distributed storage system based on the distribution of the to-be-written data lengths in the future time window comprises: acquiring multiple candidate write mode sets, wherein any candidate write mode set is configured to at least comprise a replica mechanism write mode and an erasure coding mechanism write mode; and selecting, from the multiple candidate write mode sets, a target candidate write mode set with a smallest predicted cumulative write data length, and adjusting the write mode set supported by the distributed storage system to the target candidate write mode set.

In at least an embodiment, the adjusting the write mode set supported by the distributed storage system based on the distribution of the to-be-written data lengths in the future time window comprises: adjusting the write mode set supported by the distributed storage system based on the distribution of the to-be-written data lengths in the future time window at intervals of a preset time, or when a change amplitude of the distribution of the to-be-written data lengths in the future time window exceeds a preset change amplitude.

At least an embodiment of the present disclosure further provides a data writing device for a distributed storage system, comprising: a receiving unit configured to receive a data write request for a target cloud disk shard in the distributed storage system, wherein the data write request is used to request to write target data; a selection unit configured to select an adaptive target write mode from a write mode set supported by the distributed storage system based on a data length of the target data, a user preset delay threshold of the target cloud disk shard, and an operating state of a storage cluster to which the target cloud disk shard belongs, wherein the write mode set is configured to at least comprise a replica mechanism write mode and an erasure coding mechanism write mode; and an execution unit configured to perform the target write mode on the target data.

At least an embodiment of the present disclosure further provides an electronic device, comprising: a processor and a memory, wherein the memory stores a computer-executable instruction; and the processor executes the computer-executable instruction stored in the memory, to cause the data writing method of any one of the above embodiments to be implemented.

At least an embodiment of the present disclosure further provides a non-transitory computer-readable storage medium, wherein a computer-executable instruction is stored in the computer-readable storage medium, and when a processor executes the computer-executable instruction, the data writing method of any of the above embodiments is implemented.

### BRIEF DESCRIPTION OF DRAWINGS

In order to more clearly describe the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without creative efforts.
Fig. 1a is a schematic diagram of data writing in a distributed storage system in the prior art;
Fig. 1b is a schematic diagram of data writing in another distributed storage system in the prior art;
Fig. 2 is a data writing method for a distributed storage system provided by an embodiment of the present disclosure;
Fig. 3 is a schematic flowchart of a data writing method for a distributed storage system provided by an embodiment of the present disclosure;
Fig. 4 is a schematic diagram of selecting different write modes provided by an embodiment of the present disclosure;
Fig. 5 is a schematic flowchart of a data writing method for a distributed storage system provided by another embodiment of the present disclosure;
Fig. 6 is a schematic flowchart of a data writing method for a distributed storage system provided by another embodiment of the present disclosure;
Fig. 7 is a structural block diagram of a data writing device for a distributed storage system provided by an embodiment of the present disclosure; and
Fig. 8 is a schematic hardware structure diagram of a data writing device for a distributed storage system provided by an embodiment of the present disclosure.

### DETAILED DESCRIPTION

In order to make the objectives, technical solutions, and advantages of the embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, rather than all of them. All other embodiments obtained by those of ordinary skill in the art based on the embodiments of the present disclosure without creative efforts shall fall within the protection scope of the present disclosure.

First, technical terms in the present disclosure are explained:

The replica mechanism is a data protection method in which one replica of data is saved in each of multiple failure domains. When a single node or a failure domain fails, the remaining replicas may still provide services. It is the most widely used data protection mechanism in distributed storage scenarios.

The erasure coding mechanism (Erasure Coding, EC) is a data protection method that can effectively detect and correct data errors by adding redundant information. It divides data into segments (m segments, each with a length of k), expands and encodes redundant data blocks (n segments, each also with a length of k), with a stripe length of m*k, and stores them in different failure domains. If one or more data blocks are incorrect, they may be recovered through the remaining data blocks. The configuration parameter (m, n, k) represents a group of EC parameters, and m and n may usually be configured as 4 and 2, or 8 and 3, etc.

In order to avoid the problem of data loss and inaccessibility caused by the failure of a small number of storage nodes, a distributed storage system usually uses a replica mechanism or an erasure coding mechanism to ensure data reliability.

The replica mechanism usually adopts a three-replica mode, that is, one piece of data needs to be written into three different storage nodes, and its IO (Input/Output) amplification factor (that is, traffic amplification) and space amplification factor are both 3. The erasure coding mechanism usually adopts a configuration ratio of 4+2, and its IO amplification factor and space amplification factor are both 1.5. The advantage of the replica mechanism is that there is no requirement for the write length and the write delay is low, while the disadvantage is that the IO amplification factor is relatively high. The advantage of the erasure coding mechanism is that the IO amplification factor is relatively low, while the disadvantage is that the write delay is higher than that of the replica mechanism, and the write length is limited to be an integral multiple of the strip, so it cannot support an arbitrary write length, which results in limited use scenarios.

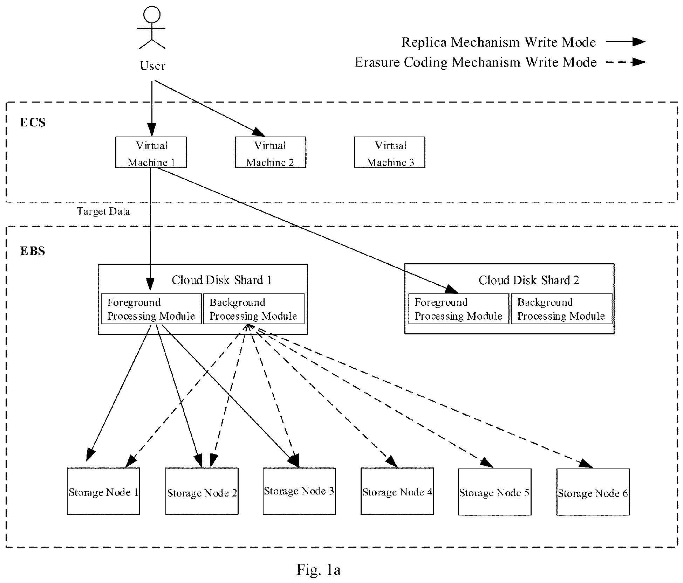

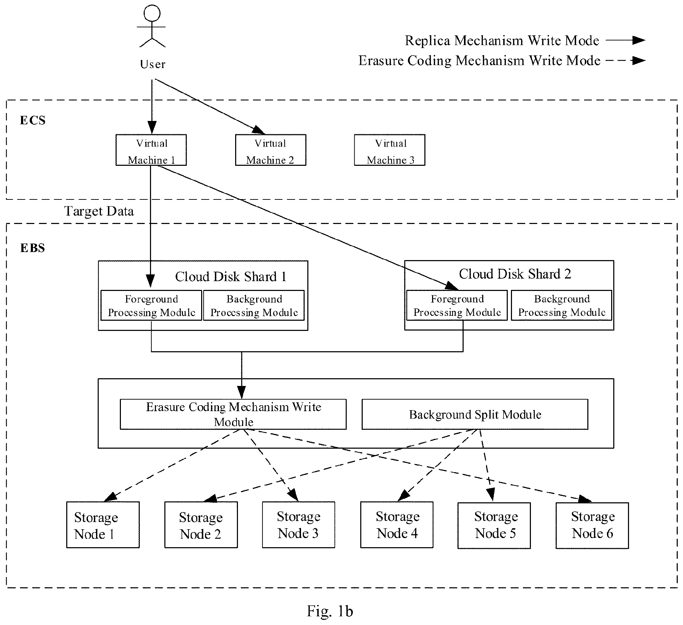

Based on the replica mechanism and the erasure coding mechanism, two technical solutions as shown in Fig. 1a and Fig. 1b are provided:
1) In the technical solution shown in Fig. 1a, a foreground processing module first uses a three-replica mechanism to write target data written by a user into different storage nodes, and then a background processing module converts three-replica data into data blocks of the erasure coding mechanism through a garbage collection task, re-inserts them into different storage nodes, and recycles the storage space occupied by the three-replica data.

The disadvantage of this technical solution is that the IO amplification factor is high and the storage cost is high, which seriously restricts the effective throughput and effective selling space that can be provided by the storage node. Taking the writing of 64KB of target data as an example, a total of 64*3 (3 replicas write) + 64*2.5 (1 read for garbage collection, 1 write for 4+2 erasure coding mechanism) = 352KB is required, and the IO amplification factor is 5.5. The distributed storage system relies on a background garbage collection task to convert replica data into erasure coding mechanism data. During the conversion period, the replica data and the erasure coding mechanism data simultaneously occupy actual physical space. When the user's foreground writing and the background conversion of the distributed storage system reach a steady state, the temporary replica data will occupy more storage space. If the background conversion traffic is greatly increased to save storage space, the foreground write throughput and delay will be seriously affected, and ultimately the user's actual experience will be affected.

2) In the technical solution shown in Fig. 1b, an aggregated erasure coding mechanism write mode is adopted to aggregate user data of multiple cloud disk shards and write after meeting the stripe requirement, to reduce the traffic amplification of the first write. In the background, through a task similar to garbage collection, the aggregated data is split into data of different cloud disk shards. For a write request that arrives first, if the length does not meet the stripe requirement, it needs to wait for a period of time to be merged with other requests for writing.

The disadvantage of this technical solution is lack of flexibility, and it is difficult to achieve a good balance between high performance and low traffic amplification. Under this technical solution, the aggregation waiting logic will increase the user write delay, which is not friendly to the user write with a small length. For the cloud disk shard with high performance specifications, only the overall switch to the replica solution may be selected to reduce the delay, and there is no ability to flexibly adjust according to the user write in a single cloud disk shard. In addition, the traffic amplification factor of the aggregated erasure coding mechanism write mode is still relatively high. Taking the configuration ratio of 4+2 as an example, the amplification factor of two erasure coding mechanism writes is 1.5*2=3.

The separate use of the replica mechanism or the erasure coding mechanism has certain limitations, and the technical solutions of Fig. 1a and Fig. 1b also have disadvantages, and it is difficult to flexibly cope with different user write scenarios, and the delay, traffic amplification and space amplification cannot be effectively balanced.

In order to solve the above technical problems, an embodiment of the present disclosure provides a data writing method for a distributed storage system, which provides multiple write modes at the same time, and selects an appropriate write mode by comprehensively considering a data length of target data, a user preset delay requirement, and a state of a storage cluster to which a target cloud disk shard belongs, to flexibly cope with different user write scenarios, balance the delay, traffic amplification and space amplification, and improve the performance of the distributed storage system.

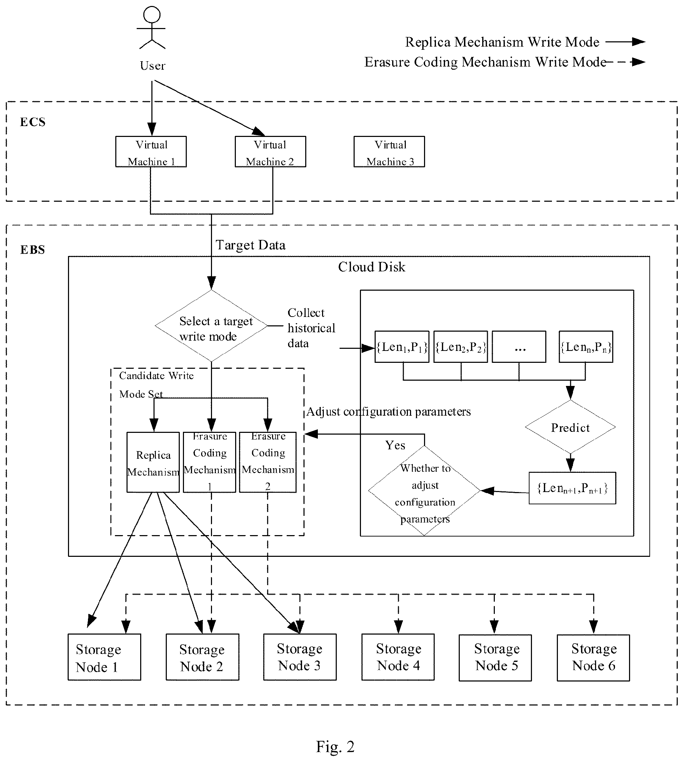

The system architecture of the data writing method for the distributed storage system in the embodiment of the present disclosure is shown in Fig. 2. An elastic computing service (ECS) may be provided in a cloud environment, and the elastic computing service may create a virtual machine (VM), and the virtual machine may mount a cloud disk of an elastic block storage service (EBS) to provide a data persistence capability, where the cloud disk may be divided into different segments, that is, cloud disk shards (Device Segment) according to a fixed size (for example, 32GB). In the process of using the virtual machine, a user may write target data into a target cloud disk shard through the virtual machine. There are multiple storage nodes (servers) at the physical layer of the elastic block storage service, and a storage cluster is composed of several storage nodes, while the cloud disk shard is a logical layer concept, and the logical storage space of one cloud disk shard may be mapped to multiple storage nodes.

A user may write target data into a target cloud disk shard through a virtual machine; an adaptive target write mode may be selected from a write mode set supported by a distributed storage system based on a data length of the target data, a user preset delay threshold of the target cloud disk shard, and a state of a storage cluster to which the target cloud disk shard belongs, where the write mode set is configured to include at least a replica mechanism write mode and an erasure coding mechanism write mode; and the target write mode is performed on the target data.

In addition, it is also possible to acquire a distribution of data lengths of historical data of the target cloud disk shard; predict a distribution of to-be-written data lengths in a future time window based on the distribution of the data lengths of the historical data of the target cloud disk shard; and adjust a write mode set supported by the distributed storage system based on the distribution of the to-be-written data lengths in the future time window. Specifically, a configuration parameter of one or more write modes in the write mode set supported by the distributed storage system may be adjusted, so as to realize the dynamic adjustment of the configuration parameter and ensure that the distributed storage system achieves better write performance.

It should be noted that the data involved in the present disclosure is information and data authorized by the user or fully authorized by all parties, and the collection, use and processing of the relevant data needs to comply with the relevant laws, regulations and standards of relevant countries and regions, and a corresponding operation entry is provided for the tenant to choose to authorize or reject.

The data writing method for the distributed storage system of the present disclosure will be described in detail below in conjunction with specific embodiments.

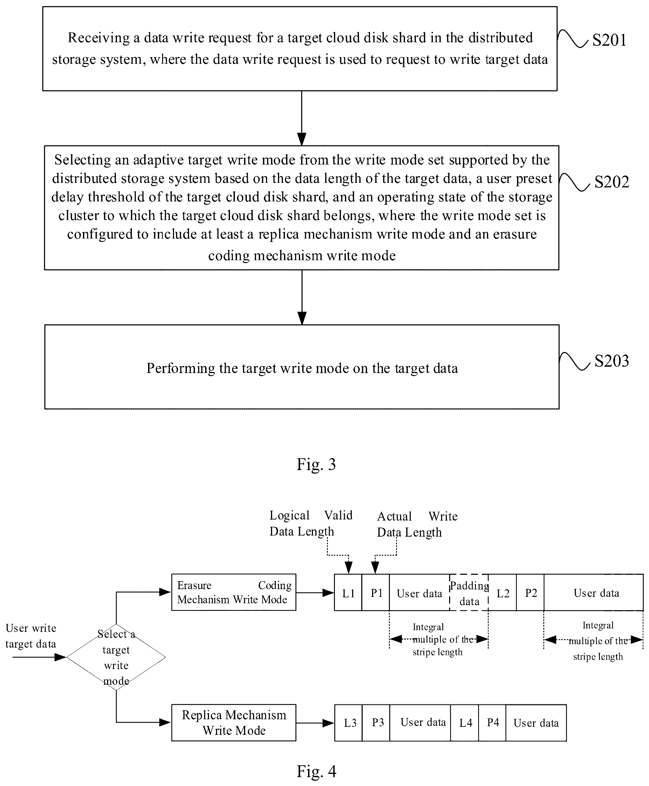

Reference is made to Fig. 3, which is a schematic flowchart of a data writing method for a distributed storage system provided by an embodiment of the present disclosure. The method of this embodiment may be applied to a terminal device or a server. The data writing method for the distributed storage system includes the following steps.

S201: receiving a data write request for a target cloud disk shard in the distributed storage system, where the data write request is used to request to write target data.

In this embodiment, there is one or more cloud disk shards in the distributed storage system, where a user of the target cloud disk shard may write data into the target cloud disk shard in the distributed storage system through the data write request, which is recorded as target data.

During specific implementation, an elastic computing service (ECS) may be provided in a cloud environment, and the elastic computing service may create a virtual machine (VM), and the virtual machine may mount a cloud disk of an elastic block storage service (EBS) to provide a data persistence capability, where the cloud disk may be divided into different segments, that is, cloud disk shards (Device Segment) according to a fixed size (for example, 32GB). **In** the process of using the virtual machine, a user may write target data into a target cloud disk shard through the virtual machine, that is, send a data write request to the target cloud disk shard through the virtual machine, where the data write request is used to request to write the target data.

There are multiple storage nodes (servers) at the physical layer of the elastic block storage service, and a storage cluster is composed of several storage nodes, while the cloud disk shard is a logical layer concept, and the logical storage space of one cloud disk shard may be mapped to multiple storage nodes.

S202: selecting an adaptive target write mode from the write mode set supported by the distributed storage system based on the data length of the target data, a user preset delay threshold of the target cloud disk shard, and an operating state of the storage cluster to which the target cloud disk shard belongs, where the write mode set is configured to include at least a replica mechanism write mode and an erasure coding mechanism write mode.

In this embodiment, the write mode set supported by the distributed storage system may be preconfigured for selection (a write mode subset supported by the target cloud disk shard may be further configured). The write mode set supported by the distributed storage system includes at least a replica mechanism write mode and an erasure coding mechanism write mode (which may also be referred to as a replica mechanism write stream and an erasure coding mechanism write stream). The replica mechanism write mode is a write mode using a replica mechanism, that is, target data is written into different storage nodes respectively with multiple replicas. The erasure coding mechanism write mode is a write mode using an erasure coding mechanism, that is, the target data is divided into multiple original shard data blocks, redundant data blocks are generated, and then the original shard data blocks and the redundant data blocks are written into different storage nodes respectively. The configuration parameter of the replica mechanism write mode includes the number of replicas, and the configuration parameter of the erasure coding mechanism write mode is (m, n, k), where m and n are the number of original shard data blocks and the number of redundant data blocks respectively, and k is the data length of the original shard data blocks and the redundant data blocks.

In this embodiment, the replica mechanism write mode and the erasure coding mechanism write mode are different in terms of delay, traffic amplification and space amplification, where the replica mechanism write mode has a relatively low delay, but relatively large traffic amplification and space amplification, while the erasure coding mechanism write mode has a relatively high delay, but relatively small traffic amplification and space amplification. The erasure coding mechanism write modes with different configuration parameters are different in terms of delay, traffic amplification and space amplification.

Optionally, the write mode set supported by the distributed storage system is configured to at least include one replica mechanism write mode and multiple erasure coding mechanism write modes. One replica mechanism write mode may be configured, which may fully support the writing of target data of any data length, and may avoid greater traffic amplification and space amplification on the basis of ensuring reliability. Certainly, if multiple replica mechanism write modes are configured, the number of replicas of each replica mechanism write mode is different, and more replicas will bring greater traffic amplification and space amplification. The configuration of multiple erasure coding mechanism write modes is considered that when the data length of the target data varies, data needs to be filled in order to meet the requirement of an integral multiple of the stripe length, the amount of data to be filled in different erasure coding mechanism write modes is different, and the wasted storage space is also different. Multiple erasure coding mechanism write modes are provided in order that an erasure coding mechanism write mode with the least wasted storage space may be selected according to different data lengths of the target data, to reduce the waste of storage space. The configuration parameters (m, n, k) of the multiple erasure coding mechanism write modes are different. Optionally, in the configuration parameters of the multiple erasure coding mechanism write modes in the write mode set supported by the distributed storage system, m and n are the same, and k is different, so that only the data length of a single data block needs to be considered to select an appropriate erasure coding write mechanism.

Different users and cloud disks with different specifications have different requirements for the delay. The cloud disk with a high performance specification is more inclined to the replica mechanism write mode to obtain a lower delay at the cost of part of traffic amplification and space amplification, while the cloud disk with low performance specifications is more inclined to the erasure coding mechanism write mode to obtain lower traffic amplification and space amplification at the cost of increasing part of the delay, thereby saving costs. The user may configure a user preset delay threshold for the cloud disk. **In** addition, since different write modes are different in terms of traffic amplification and space amplification, the state of the storage cluster to which the target cloud disk shard belongs also needs to be considered when the target write mode is selected, such as the resource status of the storage cluster to which the target cloud disk shard belongs, i.e. the storage cluster to which the storage node deploying the target cloud disk shard belongs. For example, the resource state parameter and the performance state parameter of the storage cluster may be considered. The resource state parameter may be the used amount of the storage resource, and the performance state parameter may be the IOPS, throughput, load size, etc. When neither the resource state parameter nor the performance state parameter of the storage cluster exceeds the corresponding preset state threshold, that is, the storage cluster still has sufficient storage space and the performance pressure of the storage cluster is not large, the replica mechanism write mode may be selected more to obtain better write performance. When at least one of the resource state parameter and the performance state parameter of the storage cluster does not exceed the corresponding preset state threshold, that is, the remaining storage space of the storage cluster is insufficient, and/or the performance pressure of the storage cluster is relatively large, the erasure coding mechanism write mode may be selected more to reduce the overall traffic amplification at the cost of sacrificing the write performance. The preset state threshold corresponding to the resource state parameter of the storage cluster and the preset state threshold corresponding to the performance state parameter of the storage cluster may be set according to the actual situation. **In** addition, the data length of the target data also affects the delay, traffic amplification and space amplification. If the data length is relatively small, the replica mechanism write mode may be selected more, which has a shorter delay, and the traffic amplification and space amplification are not too large. If the data length is relatively large, the erasure coding mechanism write mode may be selected more to obtain lower traffic amplification and space amplification at the cost of increasing part of the delay, thereby saving costs. Certainly, the above selection rules are not absolute and need to be considered comprehensively.

Therefore, when the target write mode is selected from the write mode set supported by the distributed storage system, the data length of the target data, the user preset delay threshold of the target cloud disk shard, and the state of the storage cluster to which the target cloud disk shard belongs may be considered comprehensively, to balance the delay, traffic amplification and space amplification, and improve the write performance of the distributed storage system. It should be noted that when the target write mode is selected from the write mode set supported by the distributed storage system, any feasible method may be adopted, as long as the balance between the delay, traffic amplification and space amplification may be achieved. For example, a target function that comprehensively considers the delay, traffic amplification and space amplification may be created, and the target write mode may be determined by solving the optimal solution. Alternatively, a model for selecting the target write mode may be trained, and the target write mode may be output by the model through inputting the data length of the target data, the user preset delay threshold of the target cloud disk shard, and the state of the storage cluster to which the target cloud disk shard belongs. Alternatively, any other feasible manner may be used, which will not be repeated here.

The user preset delay requirement may be set by the user. In addition, the write mode set supported by the distributed storage system in this embodiment also includes multiple replica mechanism write modes and multiple erasure coding mechanism write modes, and the process of selecting the target write mode may be adjusted accordingly.

S203: performing the target write mode on the target data.

In this embodiment, after the target write mode is determined, the target write mode may be performed on the target data to write data.

Specifically, if the target write mode is the replica mechanism write mode, the target data is written into different storage nodes respectively with multiple replicas. Assuming that the user writes 60KB of target data, the three-replica write will consume an actual write data length of 60KB * 3 = 180KB, that is, 180KB of traffic and storage space are required.

If the target write mode is any erasure coding mechanism write mode, the target data is segmented into original shard data blocks according to the configuration parameter by the erasure coding mechanism, and redundant data blocks are generated, and the original shard data blocks and the redundant data blocks are written into different storage nodes respectively. The configuration parameter of any erasure coding mechanism write mode is (mi, ni, ki), where mi and ni are the number of original shard data blocks and the number of redundant data blocks of the ith erasure coding mechanism write mode respectively, and ki is the data length of the original shard data blocks and the redundant data blocks. Since the erasure coding mechanism write mode limits the write length to be an integral multiple of the stripe (Stripe), it cannot support an arbitrary write length. The stripe length Stripei is mi × ki. If the data length of the target data does not meet the integral multiple of the stripe length, the data length needs to be supplemented to the integral multiple of the stripe length by padding blank data (for example, 0). Assuming that the user writes 60KB of target data, and the configuration parameter of any erasure coding mechanism write mode is (4, 2, 16KB), then the stripe length is 4 × 16KB = 64KB, and the integral multiple of the stripe length may be met after padding 4KB of blank data at the tail, and the actual write data length is 64KB × (4+2)/4 = 96KB, and 96KB of traffic and storage space are required, that is, 64KB is segmented into 4 original shard data blocks of 16KB, and then 2 redundant data blocks of 16KB are generated, and the 6 data blocks are written into different storage nodes respectively.

As an example, as shown in Fig. 4, in the erasure coding mechanism write mode, if the data length of the target data written by the user is less than an integral multiple of the stripe length, blank data is filled in the tail to meet the stripe write limitation. In addition, the logical valid length L and the actual write length P may be recorded at the head of each written data as a special identification to distinguish the filled blank data from normal user data (as shown in Fig. 4, L1 < P1), to prevent the user data from being overwritten by mistake when data is scanned in scenarios such as fault scanning. Certainly, if the data length of the target data written by the user is equal to the integral multiple of the stripe length, there is no need to fill in blank data, and the logical valid length L is equal to the actual write length P (as shown in Fig. 4, L2 = P2). In the replica mechanism write mode, there is no need to fill in blank data, and the logical valid length L is equal to the actual write length P (as shown in Fig. 4, L3 = P3, L4 = P4).

According to the data writing method for the distributed storage system provided in this embodiment, the data write request for the target cloud disk shard in the distributed storage system is received, where the data write request is used to request to write the target data; the adaptive target write mode is selected from the write mode set supported by the distributed storage system based on the data length of the target data, the user preset delay threshold of the target cloud disk shard, and the operating state of the storage cluster to which the target cloud disk shard belongs, where the write mode set is configured to include at least the replica mechanism write mode and the erasure coding mechanism write mode; and the target write mode is performed on the target data. In this embodiment, a plurality of write modes are provided at the same time, and a suitable write mode is selected by considering the data length of the target data, the user preset delay threshold of the target cloud disk shard, and the operating state of the storage cluster to which the target cloud disk shard belongs, to flexibly cope with different user write scenarios, balance the delay, traffic amplification and space amplification, and improve the performance of the distributed storage system.

Compared with the technical solutions shown in Fig. 1a and Fig. 1b, the data writing method for the distributed storage system in this embodiment may provide a higher throughput upper limit, and may better control the delay, and may achieve a better balance between throughput (IO amplification factor) and delay. In practical applications, the proportion of padding data in the erasure coding mechanism write mode is < 5%, and the IO amplification for processing the user's foreground writing is reduced to 1.53-1.6, which may effectively control the space occupancy of the cluster on the basis of ensuring a certain delay and throughput. After reducing the IO amplification, more system resources may be allocated to process user write requests, the limit bandwidth capability of the entire cluster may be increased by 800%, and at the same time, the burst bandwidth capability of the cloud disk that fits the business usage posture may be provided to ensure the sub-millisecond delay of the entire link of the cluster under medium and high loads.

In an optional embodiment, S202: selecting the adaptive target write mode from the write mode set supported by the distributed storage system based on the data length of the target data, the user preset delay threshold of the target cloud disk shard, and the operating state of the storage cluster to which the target cloud disk shard belongs may include:
selecting a replica mechanism write mode from the write mode set as the target write mode when a resource state parameter and a performance state parameter of the storage cluster to which the target cloud disk shard belongs do not exceed corresponding preset state thresholds; and
when at least one of the resource state parameter and the performance state parameter of the storage cluster to which the target cloud disk shard belongs exceeds the corresponding preset state threshold, determining whether the user preset delay threshold is lower than a delay of an erasure coding mechanism write mode in the write mode set; if yes, selecting a replica mechanism write mode from the write mode set as the target write mode; if no, selecting the adaptive target write mode from the write mode set based on the data length of the target data.

In this embodiment, it is first determined whether the resource state parameter of the storage cluster to which the target cloud disk shard belongs exceeds the corresponding preset state threshold, and whether the performance state parameter of the storage cluster exceeds the corresponding preset state threshold. If neither the resource state parameter nor the performance state parameter of the storage cluster exceeds the corresponding preset state threshold, the replica mechanism write mode may be selected as the target write mode, because the replica mechanism write mode has a lower delay, and the resources and performance of the storage cluster may support greater traffic amplification and space amplification at a lower cost.

If at least one of the resource state parameter and the performance state parameter of the storage cluster exceeds the corresponding preset state threshold, then the user preset delay requirement needs to be considered at this time, and it is determined whether the user preset delay threshold is lower than the delay of the erasure coding mechanism write mode in the write mode set. If the user preset delay threshold is lower than the delay of the erasure coding mechanism write mode in the write mode set, the delay of the erasure coding mechanism write mode cannot meet the user preset delay requirement. In this situation, regardless of whether the delay of the replica mechanism write mode meets the user preset delay requirement, the replica mechanism write mode may be selected to meet or be close to the user preset delay requirement as much as possible, and the user preset delay requirement is preferentially met at the cost of part of traffic amplification and space amplification. If the user preset delay threshold is not lower than the delay of the erasure coding mechanism write mode in the write mode set, at this time, the delays of the replica mechanism write mode and the erasure coding mechanism write mode may meet the user preset delay requirement. At this time, traffic amplification and space amplification may be considered, and the target write mode may be selected according to the data length of the target data, that is, the write mode with the smallest traffic amplification and space amplification may be selected according to the data length of the target data. The write data length of the target data in each write mode may be predicted first, and then the write mode corresponding to the smallest write data length is selected as the target write mode.

Specifically, selecting the adaptive target write mode from the write mode set based on the data length of the target data may include:
predicting, based on the data length of the target data and a configuration parameter of a replica mechanism write mode in the write mode set, a write data length of the target data using the replica mechanism write mode;
predicting, based on the data length of the target data, and a configuration parameter and a stripe length of an erasure coding mechanism write mode in the write mode set, a write data length of the target data using the erasure coding mechanism write mode; and
selecting a write mode corresponding to a predicted smallest write data length as the target write mode.

In this embodiment, the actual write data length of the target data in the replica mechanism write mode may be determined according to the data length of the target data and the amplification factor of the replica mechanism write mode, which may be specifically the product of the data length of the target data and the amplification factor of the replica mechanism write mode. The amplification factor of the replica mechanism write mode is the number of replicas, for example, three replicas, and the actual write data length is three times the data length of the target data.

The actual write data length of the target data in the erasure coding mechanism write mode needs to consider the stripe length. Since the erasure coding mechanism write mode limits the write length to be an integral multiple of the stripe (Stripe), it cannot support an arbitrary write length. Therefore, it is necessary to determine the write data length in each erasure coding mechanism write mode according to the data length of the target data, and the amplification factor and the stripe length of each erasure coding mechanism write mode.

Specifically, for any erasure coding mechanism write mode, the configuration parameter is (mi, ni, ki), the stripe length Stripei is mi × ki, and the data length of the target data is aligned to an integral multiple of the stripe length Stripei of the erasure coding mechanism write mode, that is, the data length of the target data is filled up to the integral multiple of the stripe length of the erasure coding mechanism write mode by padding blank data, and the data length of the aligned target data is determined, that is, the aligned data length of the target data. For example, assuming that the user writes 60KB of target data, and the configuration parameter of any erasure coding mechanism write mode is (4, 2, 16KB), then the stripe length is 4 × 16KB = 64KB, and the integral multiple of the stripe length may be met after padding 4KB of blank data at the tail, the aligned data length of the target data is 64KB, the amplification factor of the erasure coding mechanism write mode is (4+2)/4 = 1.5, so the actual write data length is 64KB × 1.5 = 96KB. For different configuration parameters of the erasure coding mechanism write mode, the write data length of the target data in different erasure coding mechanism write modes is also different, especially the difference in stripe length, the length of the padding blank data is different, resulting in different aligned data lengths of the target data, which in turn affects the write data length.

Further, the write mode corresponding to the predicted smallest write data length may be selected from all the write modes in the write mode set supported by the distributed storage system as the target write mode, so that the smallest traffic amplification and space amplification may be achieved.

Based on the above embodiment, the logic of selecting the target write mode may be as follows:
$\left\{\begin{matrix}replicate _ write & if , P < = {P}_{low} & C < = {C}_{low} \\ replicate _ write & else if , Lat < {WL}_{{ec}_{i}} \\ min \left(Len\times {AF}_{j},Len\times Roundup\left(Len, {Stripe}_{i}\right)\times {AF}_{i}\right) & else\end{matrix}\right.$
where *replicate_write* represents the replica mechanism write mode, the configuration parameter of the ith erasure coding mechanism write mode is (mi , ni , ki), the stripe length *Stripeᵢ* = mi × ki, P is the performance state parameter of the storage cluster, *P_{low}* is the preset water level threshold corresponding to the performance state parameter of the storage cluster, C is the resource state parameter of the storage cluster, *C_{row}* is the preset water level threshold corresponding to the resource state parameter of the storage cluster, *Lat* is the user preset delay threshold, *WLᵣ* is the delay of the replica mechanism write mode, *WL_{ecᵢ}* is the delay of the ith erasure coding mechanism write mode, *Len* is the data length of the target data, *AFⱼ* is the amplification factor of the replica mechanism write mode, *AFᵢ* is the amplification factor of the ith erasure coding mechanism write mode, *Roundup*(*Len, Stripeᵢ*) is the multiple of the aligned data length, obtained by padding the target data to an integral multiple of the stripe length with blank data, to the original data length of the target data, where *Roundup*(*Len, Stripeᵢ*) *= (Len + Stripeᵢ -* 1)/*Stripeᵢ.*

The amplification factor of the replica mechanism write mode is the number of replicas. The amplification factor of the erasure coding mechanism write mode is the ratio of the total number of data blocks of the original shard data blocks and the redundant data blocks to the number of data blocks of the original shard data blocks, that is, (mi+ni)/mi.

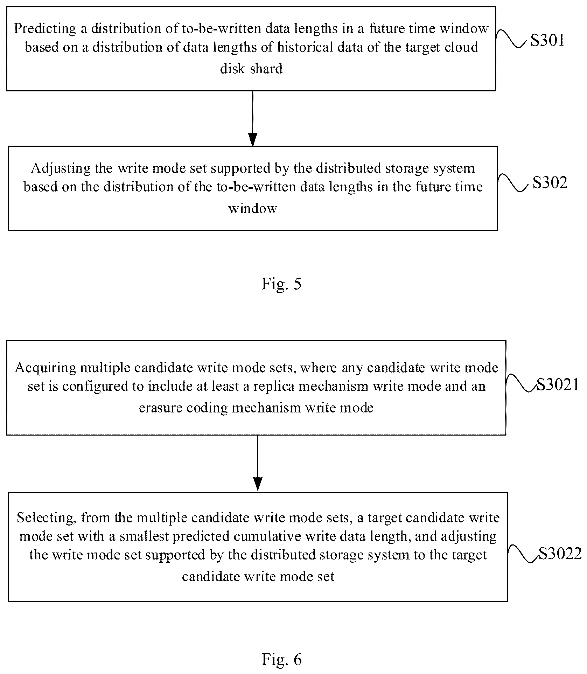

Based on any one of the above embodiments, in the public cloud environment, the write mode (write length distribution) of the user will change with time and user behavior, and the configuration parameter of the write mode set supported by the distributed storage system needs to be adjusted accordingly, especially the configuration parameter of the erasure coding mechanism write mode. Therefore, in this embodiment, a dynamic adjustment scheme for the configuration parameter of the write mode set supported by the distributed storage system is also introduced, including the adjustment of one or more configuration parameters among the number of replica mechanism write modes and the number of erasure coding mechanism write modes, the number of replicas of the replica mechanism write mode, and the configuration parameter (mi, ni, ki) of the erasure coding mechanism write mode. The specific process may be shown in Fig. 5, which includes the following steps.

S301: predicting a distribution of to-be-written data lengths in a future time window based on a distribution of data lengths of historical data of the target cloud disk shard; and

S302: adjusting the write mode set supported by the distributed storage system based on the distribution of the to-be-written data lengths in the future time window.

In this embodiment, the data length Lenx of the historical data of the target cloud disk shard and the probability Px of occurrence of each data length are determined, to obtain the distribution of the data lengths of the historical data, as the historical traffic feature of the user in the past period of time. The probability Px of occurrence of each data length is to count the frequency of occurrence of the same data length in all data lengths. For example, the user writes 5 pieces of data with a data length of 16KB in the past historical time window, and the user writes a total of 100 pieces of data in this historical time window, then the probability Px of occurrence of the data length of 16KB is 5/100 = 5%.

Further, based on the distribution of the data lengths of the historical data, the distribution of the to-be-written data lengths in the future time window may be predicted, as the traffic feature of the user in the future time window, where any feasible prediction method may be used for the prediction manner, which is not limited here. The expression may be:
$\left\{{Len}_{n + 1}, {P}_{n + 1}\right\} = Predict \left(\left\{{Len}_{x}, {P}_{x}\right\}\right) , x = 1 , 2 , 3 , … , n$
where *Predict* may be any prediction method.

Further, the write mode set supported by the distributed storage system may be adjusted according to the distribution of the to-be-written data lengths in the future time window, especially dynamically adjusting the configuration parameter of different write modes in the write mode set supported by the distributed storage system, so that the write mode set supported by the distributed storage system may adapt to the change of the distribution of the to-be-written data lengths in the future time window, and finally the performance of the distributed storage system may be improved adaptively.

S302, adjusting the write mode set supported by the distributed storage system based on the distribution of the to-be-written data lengths in the future time window, specifically as shown in Fig. 6, may include:

S3021: acquiring multiple candidate write mode sets, where any candidate write mode set is configured to include at least a replica mechanism write mode and an erasure coding mechanism write mode, and there is at least one different write mode between different candidate write mode sets; and

S3022: selecting, from the multiple candidate write mode sets, a target candidate write mode set with a smallest predicted cumulative write data length, and adjusting the write mode set supported by the distributed storage system to the target candidate write mode set.

In this embodiment, multiple different candidate write mode sets may be configured first, where any candidate write mode set at least includes a replica mechanism write mode and an erasure coding mechanism write mode, there is at least one different write mode between different candidate write mode sets, and at least one configuration parameter of different write modes is different. For example, one candidate write mode set includes one replica mechanism write mode and two erasure coding mechanism write modes, the number of replicas of the replica mechanism write mode is 3, the configuration parameter of erasure coding mechanism write mode 1 is (4, 2, 16KB), and the configuration parameter of erasure coding mechanism write mode 2 is (4, 2, 30KB). Another candidate write mode set includes one replica mechanism write mode and three erasure coding mechanism write modes, the number of replicas of the replica mechanism write mode is 4, the configuration parameter of erasure coding mechanism write mode 1 is (4, 2, 16KB), the configuration parameter of erasure coding mechanism write mode 2 is (4, 2, 25KB), and the configuration parameter of erasure coding mechanism write mode 3 is (4, 2, 40KB), etc.

Further, for any candidate write mode set, in a prediction manner, a target write mode is selected from the candidate write mode set for each to-be-written data length in the future time window, where the process of selecting the target write mode may be the same as the above embodiment (or the target write mode is selected only with the smallest actual write data length), the write data length of each to-be-written data length in the respective corresponding target write mode may be obtained, and the write data length of each to-be-written data length in the respective corresponding target write mode is accumulated to obtain the predicted cumulative write data length. Similarly, the above cumulative write data length may be obtained for each of the multiple different candidate write mode sets, and then a candidate write mode set with the smallest predicted cumulative write data length may be selected from the multiple different candidate write mode sets as the optimal target candidate write mode set, and the write mode set supported by the distributed storage system is adjusted to the target candidate write mode set. Alternatively, the configuration parameter of the corresponding write mode in the write mode set supported by the distributed storage system may be adjusted according to the target candidate write mode set.

On the basis of the above embodiment, the process of determining the target candidate write mode set with the smallest predicted cumulative write data length may be specifically as follows:
for any candidate write mode set, where the configuration parameter of the ith erasure coding mechanism write mode is (mi, ni, ki), the stripe length Stripei = mi × ki, the amplification factor is AFi = (mi + ni)/ mi;
when any to-be-written data length Lenn+1 in the future time window adopts the ith erasure coding mechanism write mode, the multiple of the aligned data length, obtained by padding the target data to an integral multiple of the stripe length with blank data, to the original data length of the target data is *Roundup*(*Len*_{*n*+1},*stripeᵢ*) *=* (*Gen*_{*n*+1} *+ stripeᵢ -* 1)/*stripeᵢ*;
the amplification factor of the replica mechanism write mode is AFj;
then the strategy for solving the optimal configuration parameter, that is, the strategy for determining the target candidate write mode set with the smallest cumulative write data length is: minimizing the cumulative write data length for any candidate write mode set, and the target function is as follows:
   $min {\sum }_{i , j} min \left({Len}_{n + 1}\times {P}_{n + 1}\times {AF}_{j},{Len}_{n + 1}\times {P}_{n + 1}\times Roundup\left({Len}_{n + 1}, {stripe}_{i}\right)\times {AF}_{i}\right)$

By solving the above target function, the configuration parameter of the optimal target candidate write mode set may be obtained.

In practical applications, if the data length of the data written by the user is relatively small, more replica mechanism write modes tend to be selected, and if the data written by the user is a relatively large data length for a long time, a erasure coding mechanism write mode with a greater configuration ration and a greater number of the erasure coding mechanism write modes will be selected.

It should be noted that, in the above embodiment, the write mode set supported by the distributed storage system may be adjusted according to the distribution of the to-be-written data lengths in the future time window at intervals of a preset time, or when the change amplitude of the distribution of the to-be-written data lengths in the future time window exceeds a preset change amplitude, so as to timely perceive the change of the user write mode (write length distribution) and realize adaptive dynamic adjustment of the configuration parameter.

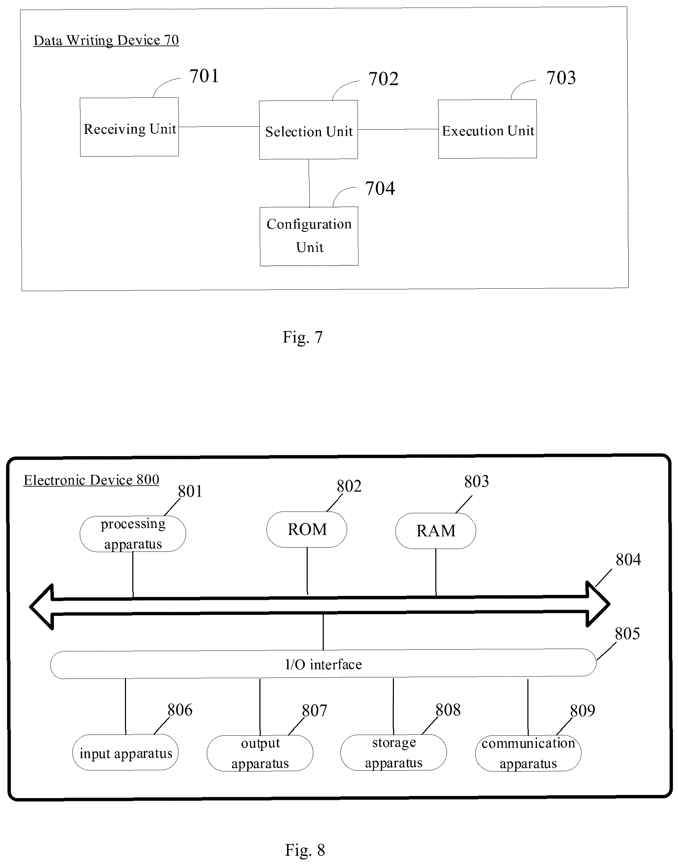

Corresponding to the data writing method for the distributed storage system in the above embodiments, Fig. 7 is a structural block diagram of a data writing device for a distributed storage system provided by an embodiment of the present disclosure. For convenience of explanation, only parts related to the embodiments of the present disclosure are shown. Referring to Fig. 7, the data writing device 70 for the distributed storage system includes: a receiving unit 701, a selection unit 702, and an execution unit 703.

The receiving unit 701 is configured to receive a data write request for a target cloud disk shard in the distributed storage system, where the data write request is used to request to write target data.

The selection unit 702 is configured to select an adaptive target write mode from a write mode set supported by the distributed storage system based on a data length of the target data, a user preset delay threshold of the target cloud disk shard, and an operating state of a storage cluster to which the target cloud disk shard belongs, where the write mode set is configured to at least include a replica mechanism write mode and an erasure coding mechanism write mode.

The execution unit 703 is configured to perform the target write mode on the target data.

According to the data writing device for the distributed storage system provided in this embodiment, the data write request for the target cloud disk shard in the distributed storage system is received, where the data write request is used to request to write the target data; the adaptive target write mode is selected from the write mode set supported by the distributed storage system based on the data length of the target data, the user preset delay threshold of the target cloud disk shard, and the operating state of the storage cluster to which the target cloud disk shard belongs, where the write mode set is configured to include at least the replica mechanism write mode and the erasure coding mechanism write mode; and the target write mode is performed on the target data. In the embodiments of the present disclosure, a plurality of write modes are provided at the same time, and a suitable write mode is selected by considering the data length of the target data, the user preset delay threshold of the target cloud disk shard, and the operating state of the storage cluster to which the target cloud disk shard belongs, to flexibly cope with different user write scenarios, balance the delay, traffic amplification and space amplification, and improve the performance of the distributed storage system.

In one or more embodiments of the present disclosure, the selection unit 702 is configured to, when selecting the adaptive target write mode from the write mode set supported by the distributed storage system based on the data length of the target data, the user preset delay threshold of the target cloud disk shard, and the operating state of the storage cluster to which the target cloud disk shard belongs, select a replica mechanism write mode from the write mode set as the target write mode when a resource state parameter and a performance state parameter of the storage cluster to which the target cloud disk shard belongs do not exceed corresponding preset state thresholds; and when at least one of the resource state parameter and the performance state parameter of the storage cluster to which the target cloud disk shard belongs exceeds the corresponding preset state threshold, determine whether the user preset delay threshold is lower than a delay of an erasure coding mechanism write mode in the write mode set; if yes, select a replica mechanism write mode from the write mode set as the target write mode; if no, select the adaptive target write mode from the write mode set based on the data length of the target data.

In one or more embodiments of the present disclosure, the selection unit 702 is configured to, when selecting the adaptive target write mode from the write mode set based on the data length of the target data: predict, based on the data length of the target data and a configuration parameter of a replica mechanism write mode in the write mode set, a write data length of the target data when the replica mechanism write mode is adopted; predict, based on the data length of the target data, and a configuration parameter and a stripe length of an erasure coding mechanism write mode in the write mode set, a write data length of the target data when the erasure coding mechanism write mode is adopted; and select a write mode corresponding to a predicted smallest write data length as the target write mode.

In one or more embodiments of the present disclosure, the selection unit 702 is configured to, when predicting, based on the data length of the target data, and the configuration parameter and the stripe length of the erasure coding mechanism write mode in the write mode set, the write data length of the target data when the erasure coding mechanism write mode is adopted: align the data length of the target data to an integral multiple of the stripe length to determine an aligned data length of the target data; and determine a product of the aligned data length of the target data and an amplification factor of the erasure coding mechanism write mode as the write data length of the target data when the erasure coding mechanism write mode is adopted.

In one or more embodiments of the present disclosure, the selection unit 702 is configured to, when predicting, based on the data length of the target data and the configuration parameter of the replica mechanism write mode in the write mode set, the write data length of the target data when the replica mechanism write mode is adopted: determine a product of the data length of the target data and an amplification factor of the replica mechanism write mode as the write data length of the target data when the replica mechanism write mode is adopted.

In one or more embodiments of the present disclosure, the write mode set is configured to include at least one replica mechanism write mode and multiple erasure coding mechanism write modes.

In one or more embodiments of the present disclosure, the device further includes a configuration unit 704 configured to: predict a distribution of to-be-written data lengths in a future time window based on a distribution of data lengths of historical data of the target cloud disk shard; and adjust the write mode set supported by the distributed storage system based on the distribution of the to-be-written data lengths in the future time window.

In one or more embodiments of the present disclosure, the configuration unit 704 is configured to, when adjusting the configuration parameter of the at least one write mode in the write mode set based on the distribution of the to-be-written data lengths in the future time window: acquire multiple candidate write mode sets, where any candidate write mode set is configured to include at least a replica mechanism write mode and an erasure coding mechanism write mode, and there is at least one different write mode between different candidate write mode sets; and select, from the multiple candidate write mode sets, a target candidate write mode set with a smallest predicted cumulative write data length, and adjust the write mode set supported by the distributed storage system to the target candidate write mode set.

In one or more embodiments of the present disclosure, the configuration unit 704 is configured to, when adjusting the write mode set supported by the distributed storage system based on the distribution of the to-be-written data lengths in the future time window: adjust the write mode set supported by the distributed storage system based on the distribution of the to-be-written data lengths in the future time window at intervals of a preset time, or when a change amplitude of the distribution of the to-be-written data lengths in the future time window exceeds a preset change amplitude.

The device provided in this embodiment may be used to implement the technical solutions of the above method embodiments, and the implementation principles and technical effects thereof are similar, which will not be repeated here in this embodiment.

In order to implement the above embodiments, an embodiment of the present disclosure further provides an electronic device.

Reference is made to Fig. 8, which shows a schematic structural diagram of an electronic device 800 suitable for implementing the embodiments of the present disclosure, and the electronic device 800 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), an on-board terminal (for example, an on-board navigation terminal), etc., and fixed terminals such as a digital TV, a desktop computer, etc. The electronic device shown in Fig. 8 is only an example, and should not impose any limitation to the function and scope of use of the embodiments of the present disclosure.

As shown in Fig. 8, the electronic device 800 may include a processing apparatus (e.g., a central processing unit, a graphics processor, etc.) 801, which may perform various appropriate actions and processing according to a program stored in a read-only memory (abbreviated as ROM) 802 or a program loaded from a storage apparatus 808 into a random access memory (abbreviated as RAM) 803. The RAM 803 further stores various programs and data required for operations of the electronic device 800. The processing apparatus 801, the ROM 802, and the RAM 803 are interconnected by means of a bus 804. An input/output (I/O) interface 805 is also connected to the bus 804.

Usually, the following apparatus may be connected to the I/O interface 805: an input apparatus 806 including, for example, a touch screen, a touchpad, a keyboard, a mouse, a camera, a microphone, an accelerometer, a gyroscope, etc.; an output apparatus 807 including, for example, a liquid crystal display (Liquid Crystal Display, LCD for short), a speaker, a vibrator, etc.; a storage apparatus 808 including, for example, a magnetic tape, a hard disk, etc.; and a communication apparatus 809. The communication apparatus 809 may allow the electronic device 800 to perform wireless or wired communication with other devices to exchange data. Although Fig. 8 shows the electronic device 800 with various apparatuses, it should be understood that it is not required to implement or have all of the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program contains program codes for performing the method shown in the flowchart. In such an embodiment, the computer program may be downloaded and installed from a network through the communication apparatus 809, or installed from the storage apparatus 808, or installed from the ROM 802. When the computer program is executed by the processing apparatus 801, the above-mentioned functions defined in the method of the embodiments of the present disclosure are executed, and the implementation principles and technical effects thereof are similar, which will not be repeated here in this embodiment.

It should be noted that the above computer-readable medium in the present disclosure may be a computer-readable signal medium, a computer-readable storage medium, or any combination thereof. The computer-readable storage medium may be, for example, but not limited to, an electronic, magnetic, optical, electromagnetic, infrared, or semiconductor system, apparatus or device, or any suitable combination of the above. More specific examples of the computer-readable storage medium may include, but are not limited to: an electrically connected portable computer magnetic disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, which may be used by or in combination with an instruction execution system, apparatus or device. In the present disclosure, a computer-readable signal medium may include a data signal propagated in a baseband or as a part of a carrier wave, and computer-readable program codes are carried therein. This propagated data signal may adopt multiple forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit a program for use by or in combination with an instruction execution system, apparatus or device. The program codes contained on the computer-readable medium may be transmitted by any suitable medium, including but not limited to: a wire, an optical cable, an RF (radio frequency), etc., or any suitable combination of the above.

The above computer-readable medium may be included in the above electronic device, or may exist alone without being assembled into the electronic device.

The above computer-readable medium carries one or more programs, and when the one or more programs are executed by the electronic device, the electronic device is caused to execute the method shown in the above embodiments, and the implementation principles and technical effects thereof are similar, which will not be repeated here in this embodiment.

According to the electronic device, the storage medium, and the program product provided in the embodiments of the present disclosure, the data write request for the target cloud disk shard in the distributed storage system is received, where the data write request is used to request to write the target data; the adaptive target write mode is selected from the write mode set supported by the distributed storage system based on the data length of the target data, the user preset delay threshold of the target cloud disk shard, and the operating state of the storage cluster to which the target cloud disk shard belongs, where the write mode set is configured to include at least the replica mechanism write mode and the erasure coding mechanism write mode; and the target write mode is performed on the target data. **In** the embodiments of the present disclosure, a plurality of write modes are provided at the same time, and a suitable write mode is selected by considering the data length of the target data, the user preset delay threshold of the target cloud disk shard, and the operating state of the storage cluster to which the target cloud disk shard belongs, to flexibly cope with different user write scenarios, balance the delay, traffic amplification and space amplification, and improve the performance of the distributed storage system.

The computer program codes for performing the operations of the present disclosure may be written in one or more programming languages or a combination thereof, where the programming languages include object-oriented programming languages such as Java, Smalltalk, C++, and conventional procedural programming languages such as "C" language or similar programming languages. The program codes may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network, including a local area network (abbreviated as LAN) or a wide area network (abbreviated as WAN), or may be connected to an external computer (for example, connected by using Internet provided by an Internet service provider).

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, program segment, or portion of code, which includes one or more executable instructions for implementing the specified logical function(s). It should also be noted that, in some alternative implementations, the functions noted in the block may occur in an order different from that noted in the drawings. For example, two blocks shown in succession may, in fact, be executed substantially concurrently, or the blocks may sometimes be executed in a reverse order, depending upon the functionality involved. It will also be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The units involved in the embodiments of the present disclosure may be implemented by software or by hardware. The name of a unit does not constitute a limitation on the unit itself under certain circumstances, for example, a first acquisition unit may also be described as "a unit for acquiring at least two internet protocol addresses".

The functions described above herein may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In a first aspect, according to one or more embodiments of the present disclosure, a data writing method for a distributed storage system is provided, including: receiving a data write request for a target cloud disk shard in the distributed storage system, where the data write request is used to request to write target data; selecting an adaptive target write mode from a write mode set supported by the distributed storage system based on a data length of the target data, a user preset delay threshold of the target cloud disk shard, and an operating state of a storage cluster to which the target cloud disk shard belongs, where the write mode set is configured to include at least a replica mechanism write mode and an erasure coding mechanism write mode; and performing the target write mode on the target data.

According to one or more embodiments of the present disclosure, the selecting the adaptive target write mode from the write mode set supported by the distributed storage system based on the data length of the target data, the user preset delay threshold of the target cloud disk shard, and the operating state of the storage cluster to which the target cloud disk shard belongs includes: selecting a replica mechanism write mode from the write mode set as the target write mode when a resource state parameter and a performance state parameter of the storage cluster to which the target cloud disk shard belongs do not exceed corresponding preset state thresholds; and when at least one of the resource state parameter and the performance state parameter of the storage cluster to which the target cloud disk shard belongs exceeds the corresponding preset state threshold, determining whether the user preset delay threshold is lower than a delay of an erasure coding mechanism write mode in the write mode set; if yes, selecting a replica mechanism write mode from the write mode set as the target write mode; if no, selecting the adaptive target write mode from the write mode set based on the data length of the target data.

According to one or more embodiments of the present disclosure, the selecting the adaptive target write mode from the write mode set based on the data length of the target data includes: predicting, based on the data length of the target data and a configuration parameter of a replica mechanism write mode in the write mode set, a write data length of the target data when the replica mechanism write mode is adopted; predicting, based on the data length of the target data, and a configuration parameter and a stripe length of an erasure coding mechanism write mode in the write mode set, a write data length of the target data when the erasure coding mechanism write mode is adopted; and selecting a write mode corresponding to a predicted smallest write data length as the target write mode.

According to one or more embodiments of the present disclosure, the predicting, based on the data length of the target data, and the configuration parameter and the stripe length of the erasure coding mechanism write mode in the write mode set, the write data length of the target data when the erasure coding mechanism write mode is adopted includes: aligning the data length of the target data to an integral multiple of the stripe length to determine an aligned data length of the target data; and determining a product of the aligned data length of the target data and an amplification factor of the erasure coding mechanism write mode as the write data length of the target data when the erasure coding mechanism write mode is adopted.

According to one or more embodiments of the present disclosure, the predicting, based on the data length of the target data and the configuration parameter of the replica mechanism write mode in the write mode set, the write data length of the target data when the replica mechanism write mode is adopted includes: determining a product of the data length of the target data and an amplification factor of the replica mechanism write mode as the write data length of the target data when the replica mechanism write mode is adopted.

According to one or more embodiments of the present disclosure, the write mode set is configured to include at least one replica mechanism write mode and multiple erasure coding mechanism write modes.

According to one or more embodiments of the present disclosure, the method further includes: predicting a distribution of to-be-written data lengths in a future time window based on a distribution of data lengths of historical data of the target cloud disk shard; and adjusting the write mode set supported by the distributed storage system based on the distribution of the to-be-written data lengths in the future time window.

According to one or more embodiments of the present disclosure, the adjusting the configuration parameter of the at least one write mode in the write mode set based on the distribution of the to-be-written data lengths in the future time window includes: acquiring multiple candidate write mode sets, where any candidate write mode set is configured to include at least a replica mechanism write mode and an erasure coding mechanism write mode, and there is at least one different write mode between different candidate write mode sets; and selecting, from the multiple candidate write mode sets, a target candidate write mode set with a smallest predicted cumulative write data length, and adjusting the write mode set supported by the distributed storage system to the target candidate write mode set.

According to one or more embodiments of the present disclosure, the adjusting the write mode set supported by the distributed storage system based on the distribution of the to-be-written data lengths in the future time window includes: adjusting the write mode set supported by the distributed storage system based on the distribution of the to-be-written data lengths in the future time window at intervals of a preset time, or when a change amplitude of the distribution of the to-be-written data lengths in the future time window exceeds a preset change amplitude.

In a second aspect, according to one or more embodiments of the present disclosure, a data writing device for a distributed storage system is provided, including: a receiving unit configured to receive a data write request for a target cloud disk shard in the distributed storage system, where the data write request is used to request to write target data; a selection unit configured to select an adaptive target write mode from a write mode set supported by the distributed storage system based on a data length of the target data, a user preset delay threshold of the target cloud disk shard, and an operating state of a storage cluster to which the target cloud disk shard belongs, where the write mode set is configured to include at least a replica mechanism write mode and an erasure coding mechanism write mode; and an execution unit configured to perform the target write mode on the target data.

According to one or more embodiments of the present disclosure, the selection unit is configured to, when selecting the adaptive target write mode from the write mode set supported by the distributed storage system based on the data length of the target data, the user preset delay threshold of the target cloud disk shard, and the operating state of the storage cluster to which the target cloud disk shard belongs: select a replica mechanism write mode from the write mode set as the target write mode when a resource state parameter and a performance state parameter of the storage cluster to which the target cloud disk shard belongs do not exceed corresponding preset state thresholds; and when at least one of the resource state parameter and the performance state parameter of the storage cluster to which the target cloud disk shard belongs exceeds the corresponding preset state threshold, determine whether the user preset delay threshold is lower than a delay of an erasure coding mechanism write mode in the write mode set; if yes, select a replica mechanism write mode from the write mode set as the target write mode; if no, select the adaptive target write mode from the write mode set based on the data length of the target data.

According to one or more embodiments of the present disclosure, the selection unit is configured to, when selecting the adaptive target write mode from the write mode set based on the data length of the target data: predict, based on the data length of the target data and a configuration parameter of a replica mechanism write mode in the write mode set, a write data length of the target data when the replica mechanism write mode is adopted; predict, based on the data length of the target data, and a configuration parameter and a stripe length of an erasure coding mechanism write mode in the write mode set, a write data length of the target data when the erasure coding mechanism write mode is adopted; and select a write mode corresponding to a predicted smallest write data length as the target write mode.

According to one or more embodiments of the present disclosure, the selection unit is configured to, when predicting, based on the data length of the target data, and the configuration parameter and the stripe length of the erasure coding mechanism write mode in the write mode set, the write data length of the target data when the erasure coding mechanism write mode is adopted: align the data length of the target data to an integral multiple of the stripe length to determine an aligned data length of the target data; and determine a product of the aligned data length of the target data and an amplification factor of the erasure coding mechanism write mode as the write data length of the target data when the erasure coding mechanism write mode is adopted.

According to one or more embodiments of the present disclosure, the selection unit is configured to, when predicting, based on the data length of the target data and the configuration parameter of the replica mechanism write mode in the write mode set, the write data length of the target data when the replica mechanism write mode is adopted: determine a product of the data length of the target data and an amplification factor of the replica mechanism write mode as the write data length of the target data when the replica mechanism write mode is adopted.

According to one or more embodiments of the present disclosure, the write mode set is configured to include at least one replica mechanism write mode and multiple erasure coding mechanism write modes.

According to one or more embodiments of the present disclosure, the device further includes a configuration unit configured to: predict a distribution of to-be-written data lengths in a future time window based on a distribution of data lengths of historical data of the target cloud disk shard; and adjust the write mode set supported by the distributed storage system based on the distribution of the to-be-written data lengths in the future time window.

According to one or more embodiments of the present disclosure, the configuration unit is configured to, when adjusting the configuration parameter of the at least one write mode in the write mode set based on the distribution of the to-be-written data lengths in the future time window: acquire multiple candidate write mode sets, where any candidate write mode set is configured to include at least a replica mechanism write mode and an erasure coding mechanism write mode, and there is at least one different write mode between different candidate write mode sets; and select, from the multiple candidate write mode sets, a target candidate write mode set with a smallest predicted cumulative write data length, and adjust the write mode set supported by the distributed storage system to the target candidate write mode set.

According to one or more embodiments of the present disclosure, the configuration unit is configured to, when adjusting the write mode set supported by the distributed storage system based on the distribution of the to-be-written data lengths in the future time window: adjust the write mode set supported by the distributed storage system based on the distribution of the to-be-written data lengths in the future time window at intervals of a preset time, or when a change amplitude of the distribution of the to-be-written data lengths in the future time window exceeds a preset change amplitude.

In a third aspect, according to one or more embodiments of the present disclosure, an electronic device is provided, including: at least one processor and a memory; where the memory stores a computer-executable instruction; and the at least one processor executes the computer-executable instruction stored in the memory, to cause the at least one processor to execute the data writing method for the distributed storage system according to the first aspect and various possible designs of the first aspect.

In a fourth aspect, according to one or more embodiments of the present disclosure, a non-transitory computer-readable storage medium is provided, where a computer-executable instruction is stored in the computer-readable storage medium, and when a processor executes the computer-executable instruction, the data writing method for the distributed storage system according to the first aspect and various possible designs of the first aspect is implemented.

In a fifth aspect, according to one or more embodiments of the present disclosure, a computer program product is provided, which includes a computer program, where when the computer program is executed by a processor, the data writing method for the distributed storage system according to the first aspect and various possible designs of the first aspect is implemented.

The above description only shows preferred embodiments of the present disclosure and illustrates technical principles applied in the present application. Those skilled in the art should understand that the scope of disclosure involved in the present disclosure is not limited to the technical solution formed by the specific combination of the above technical features, and should also cover other technical solutions formed by any combination of the above technical features or their equivalent features without departing from the above concept of disclosure. For example, the above features and the technical features provided in the present disclosure (but not limited thereto) with similar functions may be replaced each other to form a technical solution.

In addition, although operations are depicted in a particular order, it should not be understood that these operations are required to be performed in the shown particular order or in a sequential order. Under certain circumstances, multitasking and parallel processing may be advantageous. Similarly, although several specific implementation details are included in the above discussion, these details should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions described above. Conversely, the specific features and actions described above are merely exemplary forms of implementing the claims.

## Claims

1. A data writing method for a distributed storage system, comprising:
receiving a data write request for a target cloud disk shard in the distributed storage system, wherein the data write request is used to request to write target data;
selecting an adaptive target write mode from a write mode set supported by the distributed storage system based on a data length of the target data, a user preset delay threshold of the target cloud disk shard, and an operating state of a storage cluster to which the target cloud disk shard belongs, wherein the write mode set is configured to at least comprise a replica mechanism write mode and an erasure coding mechanism write mode; and
performing the target write mode on the target data.

2. The method of claim 1, wherein the selecting an adaptive target write mode from a write mode set supported by the distributed storage system based on a data length of the target data, a user preset delay threshold of the target cloud disk shard, and an operating state of a storage cluster to which the target cloud disk shard belongs comprises:
selecting the replica mechanism write mode from the write mode set as the target write mode in response to neither a resource state parameter nor a performance state parameter of the storage cluster to which the target cloud disk shard belongs exceeding respective corresponding preset state thresholds; and
determining whether the user preset delay threshold is lower than a delay of the erasure coding mechanism write mode in the write mode set in response to at least one of the resource state parameter and the performance state parameter of the storage cluster to which the target cloud disk shard belongs exceeding a corresponding preset state threshold; if yes, selecting the replica mechanism write mode from the write mode set as the target write mode; if no, selecting the adaptive target write mode from the write mode set based on the data length of the target data.

3. The method of claim 2, wherein the selecting the adaptive target write mode from the write mode set based on the data length of the target data comprises:
predicting, based on the data length of the target data and a configuration parameter of the replica mechanism write mode in the write mode set, a write data length of the target data using the replica mechanism write mode;
predicting, based on the data length of the target data, and a configuration parameter and a stripe length of the erasure coding mechanism write mode in the write mode set, a write data length of the target data using the erasure coding mechanism write mode; and
selecting a write mode corresponding to a predicted smallest write data length as the target write mode.

4. The method of claim 3, wherein the predicting, based on the data length of the target data, and the configuration parameter and the stripe length of the erasure coding mechanism write mode in the write mode set, the write data length of the target data using the erasure coding mechanism write mode comprises:
aligning the data length of the target data to an integral multiple of the stripe length to determine an aligned data length of the target data; and
determining a product of the aligned data length of the target data and an amplification factor of the erasure coding mechanism write mode as the write data length of the target data using the erasure coding mechanism write mode.

5. The method of claim 3, wherein the predicting, based on the data length of the target data and the configuration parameter of the replica mechanism write mode in the write mode set, the write data length of the target data using the replica mechanism write mode comprises:
determining a product of the data length of the target data and an amplification factor of the replica mechanism write mode as the write data length of the target data using the replica mechanism write mode.

6. The method of any of claims 1 to 5, wherein the write mode set is configured to at least comprise one replica mechanism write mode and multiple erasure coding mechanism write modes.

7. The method of any of claims 1 to 6, further comprising:
predicting a distribution of to-be-written data lengths in a future time window based on a distribution of data lengths of historical data of the target cloud disk shard; and
adjusting the write mode set supported by the distributed storage system based on the distribution of the to-be-written data lengths in the future time window.

8. The method of claim 7, wherein the adjusting the write mode set supported by the distributed storage system based on the distribution of the to-be-written data lengths in the future time window comprises:
acquiring multiple candidate write mode sets, wherein any candidate write mode set is configured to at least comprise a replica mechanism write mode and an erasure coding mechanism write mode; and
selecting, from the multiple candidate write mode sets, a target candidate write mode set with a smallest predicted cumulative write data length, and adjusting the write mode set supported by the distributed storage system to the target candidate write mode set.

9. The method of claim 7, wherein the adjusting the write mode set supported by the distributed storage system based on the distribution of the to-be-written data lengths in the future time window comprises:
adjusting the write mode set supported by the distributed storage system based on the distribution of the to-be-written data lengths in the future time window at intervals of a preset time, or when a change amplitude of the distribution of the to-be-written data lengths in the future time window exceeds a preset change amplitude.

10. An electronic device, comprising: a processor and a memory,
wherein the memory stores a computer-executable instruction; and
the processor executes the computer-executable instruction stored in the memory, to cause the data writing method of any of claims 1 to 9 to be implemented.

11. A computer-readable storage medium, wherein a computer-executable instruction is stored in the computer-readable storage medium, and when a processor executes the computer-executable instruction, the data writing method of any of claims 1 to 9 is implemented.
